# EUROPÄISCHE PATENTSCHRIFT

(11) **EP 3 916 275 B1**
(45) Veröffentlichungstag und Bekanntmachung des Hinweises auf die Patenterteilung: **25.09.2024**
(21) Anmeldenummer: 21173045.2
(22) Anmeldetag: 10.05.2021
(51) Int. Cl.: F16J 15/34, F04D 29/10

(54) **KREISELPUMPE MIT EINER GLEITRINGDICHTUNGSANORDNUNG**
CENTRIFUGAL PUMP WITH A MECHANICAL SEAL ASSEMBLY
POMPE CENTRIFUGE POURVU D'UN AGENCEMENT DE JOINT D'ÉTANCHÉITÉ MÉCANIQUE

(30) Priorität: 29.05.2020 DE 102020003268
(43) Veröffentlichungstag der Anmeldung: 01.12.2021
(73) Patentinhaber: KSB SE & Co. KGaA, 67227 Frankenthal (DE)
(72) Erfinder: KALB, Jürgen, 67227 Frankenthal (DE); LEBER, Daniel, 67227 Frankenthal (DE); RÜHR, Manuel, 67227 Frankenthal (DE)

(56) Entgegenhaltungen:
- EP-A1- 3 252 354
- EP-A1- 3 916 237
- DE-A1- 102013 101 246
- DE-A1- 102018 208 574
- DE-B4- 102013 005 926
- DE-U1- 202010 011 173

## Beschreibung

Die Erfindung betrifft eine Kreiselpumpe mit einer Gleitringdichtungsanordnung, wobei die Gleitringdichtungsanordnung mindestens zwei Gleitringe umfasst.

Eine Gleitringdichtung bei einer Kreiselpumpe dient zur Abdichtung einer durch das Gehäuse laufenden Welle. Gleitringdichtungen sind bei Kreiselpumpen in verschiedenen Ausführungen vorzusehen, wobei immer der Arbeitsbereich der Kreiselpumpe hinsichtlich der Materialauswahl zu berücksichtigen ist.

Eine Gleitringdichtung ist eine Dichtung, die eine rotierende Pumpenwelle aus dem feststehenden Pumpengehäuse so abdichtet, dass der Leckageverlust auf ein Mindestmaß reduziert und ein etwaiger Verschleiß der Dichtflächen so gering wie möglich gehalten wird.

Gleitringdichtungen weisen einen Dichtspalt auf, der rechtwinklig zur Wellenachse steht. Wellendichtungen dieser Bauart werden auch als axiale oder hydrodynamische Gleitringdichtungen (GLRD) bezeichnet. Solche Gleitringdichtungen benötigen gegenüber anderen Dichtungssystemen einen kleineren Bauraum und einen geringeren Wartungsaufwand. Sie bewähren sich sowohl bei niedrigen als auch bei hohen abzudichtenden Drücken und Umfangsgeschwindigkeiten.

Im Betrieb gleiten zwei Dichtflächen aufeinander, die durch hydraulische und mechanische Kräfte aufeinandergedrückt werden. Zwischen diesen beiden feinst bearbeiteten Gleitflächen befindet sich der Dichtspalt mit einem meist flüssigen Schmierfilm.

Die sehr geringe Leckage bei Gleitringdichtungen gelangt als Dampf- und Trockenleckage beim Austritt in die Atmosphäre. Trockenlauf ist eine der wesentlichen Ausfallursachen für Gleitringdichtungen, insbesondere bei Gleitringdichtungen für Kreiselpumpen. Durch einen Temperaturanstieg an den Gleitflächen wird die Verdampfungstemperatur des Schmierfilms überschritten, was zu einer Verdampfung des Schmierfilms und lokalem Trockenlauf führt. Infolge des erhöhten Verschleißes und der entstehenden Reibungswärme versagt die Dichtung thermisch. Dies kann zu einem Zerbrechen der Gleitringe führen.

Die DE 10 2013 005 926 B4 beschreibt eine Gleitringdichtungsanordnung mit einem diamantbeschichteten Gleitring, dessen Gleitfläche eine große Härte aufweist, und einem Gleitring mit Siliziumcarbid-Graphit-Verbundwerkstoff, dessen Härte deutlich geringer als die eines diamantbeschichteten Gleitrings ist.

In der DE 10 2018 208 574 A1 ist eine Wellendichtungsanordnung mit einer Gleitringdichtung und einer Nebendichtung beschrieben, die mindestens einen O-Ring aufweist, der axial verschieblich angeordnet ist. Hier wird eine Kohlenstoffschicht zur Steigerung der Beweglichkeit des O-Rings aufgebracht, um die Leckage zu reduzieren.

Die DE 20 2010 011173 U1 zeigt einen Gleitring, umfassend einen Basisbereich, eine auf den Basisbereich aufgebrachte Diamantbeschichtung und eine auf die Diamantbeschichtung aufgebrachte Schmierstoffbeschichtung, welche auf der Diamantbeschichtung haftet und Vertiefungen der Diamantbeschichtung auffüllt.

Die DE 10 2013 101246 A1 offenbart ein Gleitsystem mit einem Gleitelement und einem in gleitendem Kontakt mit dem Gleitelement stehenden Gegenkörper, wobei das Gleitelement eine wenigstens teilweise mit amorphem Kohlenstoff (DLC) beschichtete Oberfläche aufweist.

Die EP 3 252 354 A1 beschreibt eine Gleitkomponente, umfassend einen ringförmigen Dichtungsring auf der stationären Seite und einen ringförmigen Dichtungsring auf der rotierenden Seite.

Die EP 3 916 237 A1 offenbart eine Kreiselpumpe mit mindestens einer hydrodynamischen Gleitlageranordnung, wobei jede Gleitlageranordnung mindestens ein drehfest mit einer Welle verbundenes Element und mindestens ein feststehendes Gegenelement umfasst. Dabei ist mindestens ein Element mit einer Kohlenstoffschicht versehen und mindestens ein Gegenelement weist einen graphithaltigen Werkstoff auf.

Die Gleitringdichtungen weisen oft eine Wellenhülse mit Gleitring auf. Wellenhülsen können die Welle vor Verschleiß schützen. Treten Verschleißerscheinungen auf, so muss nur die deutlich preiswertere Wellenhülse ausgetauscht werden und nicht die gesamte Welle.

Auch kann die Wellenhülse aus einem höherwertigeren Werkstoff gefertigt sein, der beständiger gegen Verschleiß und Korrosion ist. Dies spart Kosten gegenüber einer Ausführung der gesamten Welle aus diesem Werkstoff. Oft werden hierzu Werkstoffe wie Siliziumcarbid oder Wolframcarbid eingesetzt, die sich aufgrund ihrer Härte als besonders langlebig erweisen. Gleichzeitig lassen sich nicht alle Gleitringgeometrien aus keramischen Werkstoffen erzeugen. In manchen Anwendungsfällen wäre ein metallischer Werkstoff aufgrund höherer Duktilität und günstigeren Recyclingeigenschaften erstrebenswert, sofern er eine ausreichende Oberflächenhärte aufweist.

Aufgabe der Erfindung ist es, eine Kreiselpumpe mit einer Anordnung zur Wellendichtung anzugeben, die eine möglichst geringe Leckage aufweist und bei der eine dauerhafte Beschädigung der Anordnung zur Wellendichtung wirksam verhindert wird. Darüber hinaus sollte sie in einer kompakten Bauweise realisierbar sein. Die Anordnung zur Wellendichtung soll sich, insbesondere beim Einsatz in Kreiselpumpen, durch eine hohe Zuverlässigkeit und eine lange Lebensdauer auszeichnen. Sie soll zudem eine einfache Montage gewährleisten sowie für Wartungsarbeiten gut zugänglich sein. Weiterhin soll die Anordnung zur Wellendichtung durch möglichst geringe Herstellungskosten überzeugen.

Diese Aufgabe wird erfindungsgemäß durch eine Kreiselpumpe mit einer Gleitringdichtung mit den Merkmalen des Anspruchs 1 gelöst. Bevorzugte Varianten sind den Unteransprüchen, der Beschreibung und den Figuren zu entnehmen.

Die erfindungsgemäße Kreiselpumpe weist eine Gleitringdichtung mit zwei Gleitringen auf. Ein erster Gleitring ist mit einer Kohlenstoffschicht versehen und ein zweiter Gleitring weist einen graphithaltigen Werkstoff auf. Gleichzeitig ist auch eine umgekehrte Anordnung denkbar, da sich die hervorragenden Eigenschaften der Gleitringdichtung auf die Tribopaarung beziehen. Auch eine Ausführung der Gleitringe als Entlastungskolben oder als Doppelkolben ist vorstellbar. Die Kohlenstoffschicht des ersten Gleitrings in Kombination mit einem graphithaltigen Gegenring verhindert wirksam eine Beschädigung der Gleitringdichtung im Falle eines Anstreifens, insbesondere bei An- oder Abfahrvorgängen der Kreiselpumpe.

Gemäß der Erfindung ist der erste Gleitring drehfest mit der Welle verbunden und der zweite Gleitring als feststehender, mit dem Gehäuse verbundener Gegenring ausgeführt.

Unter den Kohlenstoffschichten werden Schichten verstanden, in denen Kohlenstoff der überwiegende Bestandteil ist. Die Kohlenstoffschicht kann beispielsweise mit einem PVD- (engl. Physical Vapor Deposition), einer physikalischen Gasphasenabscheidung etwa durch Verdampfen oder Sputtern) oder einem CVD- (engl. Chemical Vapor Deposition; Chemische Gasphasenabscheidung) Verfahren aufgebracht werden.

Idealerweise wird die Schicht auf den ersten Gleitring aufgebracht, der erfindungsgemäß aus einem nichtrostenden Stahl, wie z. B. einem 13% Chromstahl, oder einem austenitisch-ferritischen Duplexstahl oder einer Nickelbasis-Legierung besteht. Insbesondere wird die Schicht an möglichen Berührungsflächen der beiden Gleitringe aufgebracht.

Erfindungsgemäß handelt es sich um eine tetraedrische wasserstofffreie amorphe Kohlenstoffschicht, die auch als ta-C Schicht be-zeichnet wird. Die dem Kristallgitter von Graphit zugehörigen Atombindungen (insgesamt jeweils 3) kennzeichnet man mit der Bezeichnung "sp2". Dabei liegt eine sp2-Hybridisierung vor.

Bei einer Diamantschicht bildet jedes Kohlenstoffatom mit vier benachbarten Atomen eine tetraederförmige Anordnung. Bei dieser räumlichen Anordnung sind alle Atomabstände gleich gering. Es wirken daher sehr hohe Bindungskräfte zwischen den Atomen, und zwar in allen Raumrichtungen. Daraus resultieren die hohe Festigkeit und die extreme Härte des Diamanten. Die dem Kristallgitter von Diamanten zugehörigen Atombindungen, insgesamt jeweils vier, kennzeichnet man mit der Bezeichnung "sp3". Somit liegt eine sp3-Hybridisierung vor.

Bei einer besonders günstigen Variante der Erfindung besteht die Kohlenstoffschicht aus einer Mischung von sp3- und sp2-hybridisiertem Kohlenstoff. Diese Schicht ist durch eine amorphe Struktur gekennzeichnet. In dieses Kohlenstoffnetzwerk können auch Fremdatome wie Wasserstoff, Silizium, Wolfram oder Fluor eingebaut sein.

Die erfindungsgemäße Anordnung einer Kohlenstoffschicht auf einem ersten Gleitring in Kombination mit einem graphithaltigen zweiten Gleitring führt zu einer erheblichen Reduzierung des Abtrags gegeneinander reibender Bauteile. Durch die Materialkombination dieser Tribopaarung wird die Gleitfähigkeit so weit gesteigert, dass selbst bei einem Anstreifen eine Beschädigung der Gleitringe wirksam verhindert wird.

Bei einer alternativen Variante der Erfindung ist es denkbar, dass die Beschichtung in Form von nitridischen Hartstoffschichten und/oder Gleitlacken ausgeführt werden könnte.

Die Erfindung ermöglicht eine Verwirklichung von sehr kleinen Spaltmaßen. Dadurch wird der Leckagestrom minimiert und somit der Wirkungsgrad der Kreiselpumpe gesteigert. Aufwendige Wartungsarbeiten entfallen. Dies senkt die Betriebskosten.

Durch die Anordnung einer Kohlenstoffschicht auf einem ersten Gleitring wird eine glatte axiale Oberfläche mit Antihafteigenschaften geschaffen, ohne dass eine aufwendige mechanische Nachbearbeitung der Gleitringe erforderlich ist. Somit zeichnet sich die erfindungsgemäße Kreiselpumpe mit einer Gleitringdichtung durch verhältnismäßig geringe Herstellungskosten aus.

Bei einer besonders günstigen Variante der Erfindung wird die Kohlenstoffschicht als Beschichtung auf einen ersten Gleitring aufgebracht. Die Dicke der Schicht beträgt vorteilhaft mehr als 0,5 µm, vorzugsweise mehr als 1,0 µm, insbesondere mehr als 1,5 µm. Weiterhin erweist es sich als günstig, wenn die Kohlenstoffschicht weniger als 14 µm, vorzugsweise weniger als 12 µm, insbesondere weniger als 8 µm, beträgt.

Idealerweise weist die Beschichtung des Gleitrings eine glatte axiale Oberfläche mit Antihafteigenschaften auf, bei der der Mittenrauheitswert Rₐ der Kohlenstoffschicht weniger als 0,7 µm, vorzugsweise weniger als 0,5 µm, insbesondere weniger als 0,3 µm, beträgt.

Bei einer Variante der Erfindung wird der erste Gleitring mittels einer einfachen Maskierungsvorrichtung abgedeckt, um nur den gewünschten Beschichtungsbereich frei zu lassen. Dabei können auch mehrere Gleitringe gleichzeitig in den Beschichtungsreaktor, der vorzugsweise als Vakuumkammer ausgeführt ist, eingebracht werden, wobei bei mäßiger thermischer Belastung die ta-C Beschichtung aufgebracht wird.

Die ta-C Beschichtung weist einen sehr geringen Reibbeiwert bei gleichzeitig sehr guter chemischer Beständigkeit auf. Die Härte der Beschichtung kommt der Härte von Diamanten sehr nahe, wobei die Härte vorzugsweise mehr als 20 GPa, vorzugsweise mehr als 30 GPa, insbesondere mehr als 40 GPa, und weniger als 120 GPa, vorzugsweise weniger als 110 GPa, insbesondere weniger als 100 GPa, beträgt.

Mit durchschnittlich 40 bis 75 GPa sind ta-C Beschichtungen härter als a-C:H Schichten. Zudem enthält ta-C keinen Wasserstoff. Deshalb ist davon auszugehen, dass ta-C im Kontakt mit Wasser (bei Temperaturen oberhalb 80 °C) beständiger ist als a-C:H. Im Kontakt mit anderen - insbesondere polaren - Flüssigkeiten, die Moleküle enthalten, in denen Wasserstoff gebunden ist, ist davon auszugehen, dass ta-C ebenfalls beständiger ist als a-C:H.

Vorzugsweise wird die Kohlenstoffschicht nicht unmittelbar auf den ersten Gleitring aufgebracht, sondern es wird zunächst eine Haftvermittlerschicht vorgesehen. Diese besteht vorzugsweise aus einem Werkstoff, der sowohl gut auf Stahl haftet als auch eine Kohlenstoffdiffusion verhindert, z. B. durch die Bildung stabiler Carbide. Als Haftvermittlungsschichten, die diese Anforderungen erfüllen, kommen vorzugsweise dünne Schichten aus Chrom, Titan oder Silizium zum Einsatz. Insbesondere haben sich Chrom- und Wolframcarbid als Haftvermittler bewährt.

Bei einer vorteilhaften Variante der Erfindung weist die Beschichtung eine Haftvermittler-schicht auf, die vorzugsweise einen Chromwerkstoff beinhaltet. Vorzugsweise besteht die Haftvermittlerschicht zu mehr als 30 Gew.-%, vorzugsweise mehr als 60 Gew.-%, insbesondere mehr als 90 Gew.-%, aus Chrom.

Bei der erfindungsgemäßen ta-C Beschichtung, in Materialkombination mit einem graphithaltigen zweiten Gleitring, handelt es sich um eine einfache, schnell realisierbare und wirtschaftliche Gleitringdichtung in Kreiselpumpen. Die erfindungsgemäße Beschichtung weist neben einer sehr großen Härte auch hervorragende Gleiteigenschaften und eine gute chemische Beständigkeit auf.

Zudem ermöglicht die Erfindung auch eine Beschichtung von dünnwandigen Gleitringen mit kleineren Abmessungen, was mit herkömmlichen Beschichtungen nur sehr schwer realisierbar wäre. Darüber hinaus lassen sich Gleitringgeometrien realisieren, die zuvor aus keramischen Werkstoffen fertigungsbedingt nicht realisierbar waren. Insbesondere zeichnet sich die metallische Werkstoffbasis durch eine hervorragende Duktilität aus.

Der Vorteil der höheren Härte durch die ta-C Beschichtung liegt zum einen darin begrün-det, dass sich kleine Feststoffpartikel, die oft in den Medien enthalten sind, in dem Bereich zwischen den Gleitringen ansammeln. Durch die Bewegung wirken diese Feststoffteilchen wie ein Schleifmittel und arbeiten sich so in die Oberfläche der Gleitringe ein. Dies führt dazu, dass auf der Oberfläche von herkömmlichen Gleitringen geringerer Härte Riefen entstehen können, die zum Verschleiß beider Gleitringe und einer Leckage führen.

Vorzugsweise können zur Beschichtung PECVD/PACVD-Verfahren eingesetzt werden. Dabei erfolgt eine Plasmaanregung der Gasphase durch die Einkopplung von gepulster Gleichspannung ("pulsed DC") bzw. alternativ mittelfrequenter (KHz-Bereich) oder hochfrequenter (MHz-Bereich) Leistung. Aus Gründen einer maximierten Prozessvariabilität bei unterschiedlichen Werkstückgeometrien und Beladungsdichten hat sich zudem die Einkopplung von gepulster Gleichspannung bewährt.

Idealerweise werden zur Beschichtung PVD-Verfahren eingesetzt. Diese Verfahren sind besonders einfach und weisen eine niedrige Prozesstemperatur auf. Diese Technologie führt zu Schichten, in die je nach Bedarf auch Fremdatome eingebaut sein können. Die Prozessführung erfolgt vorzugsweise so, dass Gefüge- und Dimensionsänderungen der zu beschichtenden Werkstoffe (metallisch, hoch- und niedrig legierte Edelstähle, austenitisch-ferritischer Duplexstahl, Nickelbasis-Legierung, etc.) ausgeschlossen sind.

Gegenüber einer CVD-Diamantschicht hat die ta-C-Beschichtung den Vorteil, dass die Beschichtungstemperatur für CVD-Diamantschichten 600 bis 1000 °C beträgt und für amorphe Kohlenstoffschichten wie ta-C deutlich unter 500 °C liegt. Dies ist insbesondere für das Beschichten metallischer Werkstoffe von hoher technischer Relevanz. Die Herstellung von PVD-Diamantschichten ist nicht möglich.

Erfindungsgemäß können mit dem Verfahren normale standardmäßige Serienteile wie Gleitringscheiben, Gleitringkolben, Gleitringdoppelkolben bzw. Gehäuseteile mit ta-C an den möglichen Berührungsflächen beschichtet werden. Idealerweise können so auch Gleitringgeometrien beschichtet werden, die auf Basis von keramischen Werkstoffen nicht gefertigt werden können. Insgesamt wird durch die ta-C Beschichtung auf Basis metallischer Werkstoffe ein enorm verbessertes Verschleiß- und Gleitverhalten im Vergleich zu keramischen Gleitringen erreicht. Gleitringe auf metallischer Basis zeichnen sich durch ihre verbesserte Duktilität bei einer gleichzeitig kostengünstigeren Herstellung aus. Darüber hinaus sind metallische Gleitringe auch leichter zu recyceln als beispielsweise keramische Gleitringe.

Gemäß der Erfindung ist der zweite Gleitring feststehend mit dem Gehäuse von Kreiselpumpen, insbesondere Spaltrohrmotorpumpen oder Magnetkupplungspumpen, verbunden. Erfindungsgemäß besteht der zweite Gleitring aus mehr als 70 Gew.-%, vorzugsweise mehr als 80 Gew.-%, insbesondere mehr als 90 Gew.-%, aus Graphit.

In einer vorteilhaften Variante der Erfindung ist der zweite Gleitring überwiegend aus einem harzgebundenen Graphit hergestellt. In verschiedenen alternativen Varianten der Erfindung könnte der zweite Gleitring aus Graphit mit einer Antimon- und/oder Kupferimprägnierung bestehen. Weiterhin ist es auch denkbar, dass der zweite Gleitring aus einem Faserverbundwerkstoff mit einen Graphitgehalt von vorzugsweise mehr als 30 Gew.-%, insbesondere mehr als 50 Gew.-%, bevorzugt mehr als 70 Gew.-%, besteht. Als besonders günstig erweist es sich, wenn die Matrix aus Graphit besteht. Die Fasern können aus einem keramischen Werkstoff, Glasfasern, Kunststoff oder aus Kohlefasern bestehen.

Weitere Merkmale und Vorteile der Erfindung ergeben sich aus der Beschreibung von Ausführungsbeispielen anhand der Zeichnungen und aus den Zeichnungen selbst.

### Dabei zeigt:

- Fig. 1: eine Schnittdarstellung eines Ausschnitts einer Kreiselpumpe,
- Fig. 2: eine vergrößerte Schnittdarstellung einer Anordnung zur Wellendichtung.

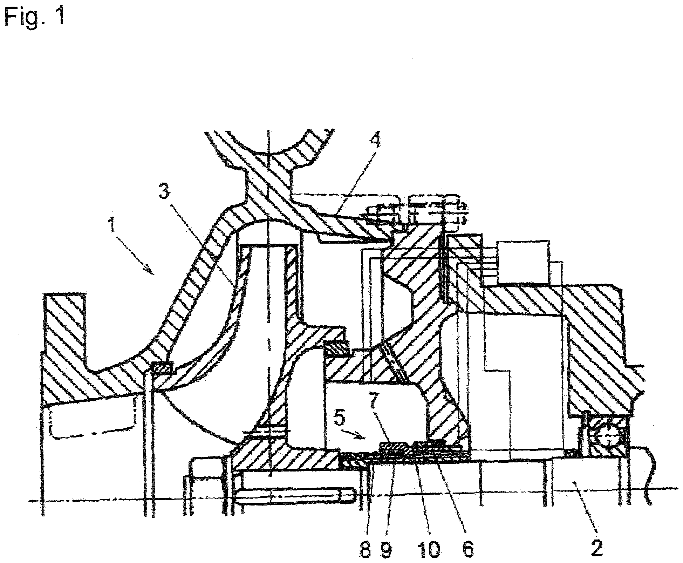

Fig. 1 zeigt eine Kreiselpumpe 1 mit einer rotierenden Welle 2, einem Laufrad 3 und einem feststehenden Gehäuse 4. Eine als Gleitringdichtung ausgeführte Gleitringdichtungsanordnung 5 umfasst einen als zweiten Gleitring 6 ausgeführten Gegenring und einen axial beweglichen ersten Gleitring 7.

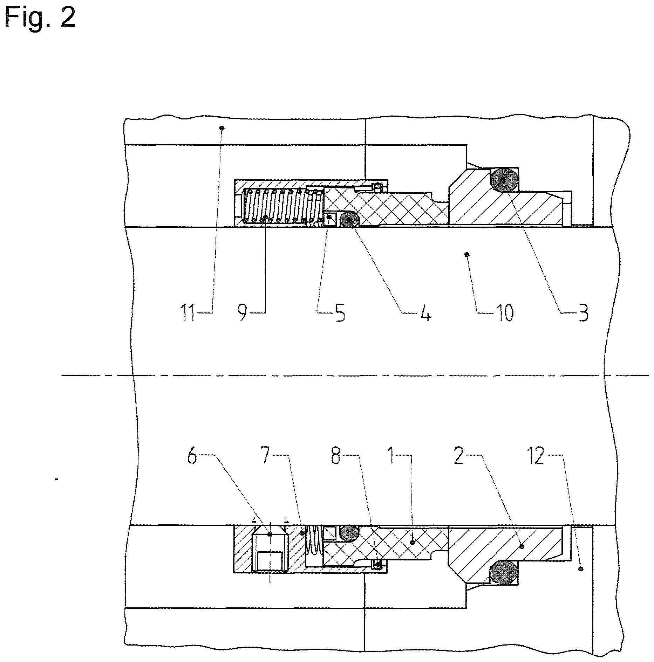

Fig. 2 zeigt eine vergrößerte Darstellung einer Gleitringdichtungsanordnung 5. Das Vorspannelement 8 übt eine Anpresskraft auf den axial verschieblichen Gleitring 7 aus. Auf der Welle 2 ist ein als Wellenhülse ausgebildetes Element 14 angeordnet, das über einen Gewindestift 13 fixiert ist. Die Darstellung gemäß Figur 2 zeigt zwei O-Ringe 15 und 16 zur Reduktion der Leckage.

Die Gleitringdichtungsanordnung 5 umfasst einen im Gehäuse 12 feststehenden als zweiten Gleitring 6 ausgeführten Gegenring und einen axial beweglichen ersten Gleitring 7. Der axial bewegliche Gleitring 7 wird mittels eines Vorspannelements 8, hier einer Druckfeder, und über eine Stützscheibe 9 in Richtung des Gegenrings 6 gedrückt, sodass einander gegenüberliegende Flächen des zweiten Gleitrings 6 und des ersten Gleitrings 7 abdichtend zusammenwirken und zwischen sich einen Dichtspalt 10 ausbilden.

Der erste Gleitring 7 ist erfindungsgemäß aus chromhaltigem, nichtrostendem Stahl, der mit einer ta-C Beschichtung versehen wurde. Der zweite Gleitring 6 weist einen graphithaltigen Werkstoff auf. Gleichzeitig ist auch eine umgekehrte Werkstoffausführung denkbar, da sich die hervorragenden Eigenschaften der Gleitringdichtungsanordnung 5 auf die erfindungsgemäße Tribopaarung beziehen. Die Kohlenstoffschicht des ersten Gleitrings 7 in Kombination mit einem graphithaltigen zweiten Gleitring 6 verhindert wirksam eine Beschädigung der Gleitringdichtungsanordnung 5 im Falle eines Anstreifens, insbesondere bei An- oder Abfahrvorgängen der Kreiselpumpe

## Patentansprüche

1. Kreiselpumpe (1) mit einer Gleitringdichtungsanordnung (5), wobei die Gleitringdichtungsanordnung (5) zwei Gleitringe (6, 7) umfasst, wobei ein erster Gleitring (7) mit einer Kohlenstoffschicht versehen ist und ein zweiter Gleitring (6) einen graphithaltigen Werkstoff aufweist, wobei die Kohlenstoffschicht des ersten Gleitrings (7) in Kombination mit dem graphithaltigen zweiten Gleitring (6) eine Tribopaarung bildet, **dadurch gekennzeichnet, dass** es sich bei der Kohlenstoffschicht um eine tetraedrische wasserstofffreie amorphe Kohlenstoffschicht handelt, wobei der zweite Gleitring (6) zu mehr als 70 Gew.-% aus Graphit und der erste Gleitring (7) aus einem nichtrostenden Stahl mit mindestens 13% Chromanteil besteht..

2. Kreiselpumpe nach einem der Ansprüche 1, **dadurch gekennzeichnet, dass** die Dicke der Kohlenstoffschicht mehr als 0,5 µm, vorzugsweise mehr als 1,0 µm, insbesondere mehr als 1,5 µm, und/oder weniger als 14 µm, vorzugsweise weniger als 12 µm, insbesondere weniger als 8 µm, beträgt.

3. Kreiselpumpe nach einem der Ansprüche 1 bis 2, **dadurch gekennzeichnet, dass** der Mittenrauheitswert Rₐ der Kohlenstoffschicht weniger als 0,7 µm, vorzugsweise weniger als 0,5 µm, insbesondere weniger als 0,3 µm, beträgt.

4. Kreiselpumpe nach einem der Ansprüche 1 bis 3, **dadurch gekennzeichnet, dass** ein zweiter Gleitring (6) zu mehr als 80 Gew.-%, insbesondere mehr als 90 Gew.-%, aus Graphit besteht.

5. Kreiselpumpe nach einem der Ansprüche 1 bis 4, **dadurch gekennzeichnet, dass** ein zweiter Gleitring (6) überwiegend aus einem harzgebundenen Graphit besteht.

6. Kreiselpumpe nach einem der Ansprüche 1 bis 5, **dadurch gekennzeichnet, dass** ein zweiter Gleitring (6) als feststehender, mit dem Gehäuse verbundener Gegenring ausgebildet ist.

7. Kreiselpumpe nach einem der Ansprüche 1 bis 6, **dadurch gekennzeichnet, dass** ein erster Gleitring (7) drehfest mit der Welle verbunden ist.

8. Kreiselpumpe nach einem der Ansprüche 1 bis 7, **dadurch gekennzeichnet, dass** die Oberflächenhärte des ersten Gleitrings (7) mit der Kohlenstoffschicht mehr als 20 GPa, vorzugsweise mehr als 30 GPa, insbesondere mehr als 40 GPa, und/oder weniger als 120 GPa, vorzugsweise weniger als 110 GPa, insbesondere weniger als 100 GPa, beträgt.

## Claims

1. Centrifugal pump (1) with a slide ring seal assembly (5), wherein the slide ring seal assembly (5) comprises two slide rings (6, 7), wherein a first slide ring (7) is provided with a carbon layer and a second slide ring (6) has a graphite-containing material, wherein the carbon layer of the first slide ring (7) in combination with the graphite-containing second slide ring (6) forms a tribological pairing, **characterized in that** the carbon layer is a tetrahedral hydrogen-free amorphous carbon layer, wherein the second slide ring (6) consists of more than 70% by weight of graphite, and the first slide ring (7) consists of a stainless steel with at least 13% chromium content.

2. Centrifugal pump according to Claim 1, **characterized in that** the thickness of the carbon layer is more than 0.5 µm, preferably more than 1.0 µm, in particular more than 1.5 µm, and/or less than 14 µm, preferably less than 12 µm, in particular less than 8 pm.

3. Centrifugal pump according to either of Claims 1 and 2, **characterized in that** the mean roughness value Rₐ of the carbon layer is less than 0.7 µm, preferably less than 0.5 µm, in particular less than 0.3 pm.

4. Centrifugal pump according to one of Claims 1 to 3, **characterized in that** a second slide ring (6) consists of more than 80% by weight, in particular more than 90% by weight, of graphite.

5. Centrifugal pump according to one of Claims 1 to 4, **characterized in that** a second slide ring (6) consists predominantly of a resin-bonded graphite.

6. Centrifugal pump according to one of Claims 1 to 5, **characterized in that** a second slide ring (6) is configured as a fixed counterpart ring connected to the casing.

7. Centrifugal pump according to one of Claims 1 to 6, **characterized in that** a first slide ring (7) is connected to the shaft for conjoint rotation therewith.

8. Centrifugal pump according to one of Claims 1 to 7, **characterized in that** the surface hardness of the first slide ring (7) having the carbon layer is more than 20 GPa, preferably more than 30 GPa, in particular more than 40 GPa, and/or less than 120 GPa, preferably less than 110 GPa, in particular less than 100 GPa.

## Revendications

1. Pompe centrifuge (1) avec un agencement de garniture mécanique d'étanchéité (5), l'agencement de garniture mécanique d'étanchéité (5) comprenant deux bagues de glissement (6, 7), une première bague de glissement (7) étant pourvue d'une couche de carbone et une deuxième bague de glissement (6) présentant un matériau contenant du graphite, la couche de carbone de la première bague de glissement (7) formant un tribo-appariement en combinaison avec la deuxième bague de glissement (6) contenant du graphite, **caractérisée en ce que** la couche de carbone consiste en une couche de carbone amorphe tétraédrique exempte d'hydrogène, la deuxième bague de glissement (6) étant composée de plus de 70 % en poids de graphite et la première bague de glissement (7) étant constituée d'un acier inoxydable avec une proportion de chrome d'au moins 13 %.

2. Pompe centrifuge selon la revendication 1, **caractérisée en ce que** l'épaisseur de la couche de carbone est supérieure à 0,5 µm, de préférence supérieure à 1,0 µm, notamment supérieure à 1,5 µm, et/ou inférieure à 14 µm, de préférence inférieure à 12 µm, notamment inférieure à 8 µm.

3. Pompe centrifuge selon l'une quelconque des revendications 1 à 2, **caractérisée en ce que** la valeur de rugosité moyenne Rₐ de la couche de carbone est inférieure à 0,7 µm, de préférence inférieure à 0,5 µm, notamment inférieure à 0,3 µm.

4. Pompe centrifuge selon l'une quelconque des revendications 1 à 3, **caractérisée en ce qu'**une deuxième bague de glissement (6) est constituée de plus de 80 % en poids, notamment de plus de 90 % en poids de graphite.

5. Pompe centrifuge selon l'une quelconque des revendications 1 à 4, **caractérisée en ce qu'**une deuxième bague de glissement (6) est constituée principalement d'un graphite lié par une résine.

6. Pompe centrifuge selon l'une quelconque des revendications 1 à 5, **caractérisée en ce qu'**une deuxième bague de glissement (6) est réalisée sous forme de contre-bague fixe reliée au carter.

7. Pompe centrifuge selon l'une quelconque des revendications 1 à 6, **caractérisée en ce qu'**une première bague de glissement (7) est reliée de manière solidaire en rotation à l'arbre.

8. Pompe centrifuge selon l'une quelconque des revendications 1 à 7, **caractérisée en ce que** la dureté de surface de la première bague de glissement (7) avec la couche de carbone est supérieure à 20 GPa, de préférence supérieure à 30 GPa, notamment supérieure à 40 GPa, et/ou inférieure à 120 GPa, de préférence inférieure à 110 GPa, notamment inférieure à 100 GPa.
